# FASCICULE DE BREVET EUROPEEN

(11) **EP 2 316 691 B1**
(45) Date de publication et mention de la délivrance du brevet: **26.09.2012**
(21) Numéro de dépôt: 10306198.2
(22) Date de dépôt: 02.11.2010
(51) Int. Cl.: B60N 2/58, B60N 3/04

(54) **Dispositif d'habillage de véhicule automobile et ensemble d'habillage comprenant un tel dispositif**
Verkleidungsvorrichtung für Kraftfahrzeug und Verkleidungseinheit, die eine solche Vorrichtung umfasst
Auto floor covering device and assembly thereof

(30) Priorité: 02.11.2009 FR 0957734
(43) Date de publication de la demande: 04.05.2011
(73) Titulaire: Faurecia Automotive Industrie, 92000 Nanterre (FR)
(72) Inventeur: Jeunehomme, Franck, 08800, MONTHERME (FR); Decorme, Jacques, 08090, MONTCY NOTRE DAME (FR); Duval, Arnaud, 08000, CHARLEVILLE-MEZIERES (FR); Henry, Laurence, 08210, VAUX-LES-MOUZON (FR)
(74) Mandataire: Domenego, Bertrand

(56) Documents cités:
- EP-A2- 0 899 154
- EP-A2- 1 614 584
- DE-A1- 10 255 446
- DE-A1-102007 063 037
- FR-A1- 2 617 102
- FR-A1- 2 900 883
- US-A- 3 450 429
- US-A- 4 399 176
- US-A- 4 465 720
- US-A1- 2004 009 323
- US-A1- 2008 292 827

## Description

La présente invention concerne un dispositif d'habillage de plancher de véhicule automobile, du type comprenant un surtapis prévu pour recouvrir un tapis de plancher de véhicule automobile, le surtapis étant muni de parties d'attache prévues pour coopérer avec des parties d'attache correspondantes du tapis pour la fixation amovible du surtapis sur le tapis.

Le document EP 1 990 236 décrit un ensemble d'habillage de véhicule automobile comprenant un tapis de plancher muni d'une empreinte de réception d'un surtapis. Le surtapis est muni sur son bord de découpes définissant des pattes prévues pour s'engager dans des cavités correspondantes ménagées dans l'empreinte pour la fixation amovible du surtapis sur le tapis.

Mais, il existe un risque de déplacement du surtapis qui peut poser des problèmes de sécurité, en particulier lorsque le surtapis est disposé sous les pieds du conducteur. Le surtapis peut par exemple glisser sous les pédales ou encore se plier.

Le document US 200810292827 décrit un ensemble d'habillage analogue au précédent, comprenant en outre des pions fixés sur le tapis et prévus pour un encliquetage dans des orifices du surtapis.

Mais le montage de ce surtapis est long et compliqué. Il faut engager chaque patte du surtapis dans les cavités correspondantes du tapis et clipper chaque pion.

Un but de la présente invention est de fournir un dispositif d'habillage comprenant un surtapis amovible qui se monte facilement et qui est fixé de manière fiable sur un tapis de plancher de véhicule automobile.

A cet effet, l'invention propose un dispositif d'habillage de plancher de véhicule automobile selon la revendication 1.

Le ou chaque élément de mise en tension du surtapis empêche le surtapis de se déformer, notamment de se plier, et limite par conséquent les risques de désengagement entre les parties d'attache prévues sur le surtapis et celles correspondantes prévues sur le tapis.

Selon d'autres modes de réalisation, l'invention comprend une ou plusieurs des caractéristiques suivantes, prise(s) isolément ou selon toutes les combinaisons techniquement possibles :
- il comprend un élément de mise en tension disposé de façon à maintenir en tension une zone du surtapis s'étendant entre deux bords opposés du surtapis ;
- il comprend au moins un élément de mise en tension disposé de façon à maintenir en tension une zone du surtapis s'étendant entre une région centrale du surtapis et un bord du surtapis ;
- il comprend deux parties d'attache disposées le long de deux bords opposés du surtapis entre lesquels le surtapis est maintenu en tension par un élément de mise en tension ;
- il comprend deux parties d'attache disposées le long d'un même bord du surtapis entre lesquels le surtapis est maintenu en tension par un élément de mise en tension;
- les parties d'attache du surtapis comprennent des crochets ;
- il comprend un élément de mise en tension ayant deux extrémités, chaque extrémité de l'élément de mise en tension est fixée sur un crochets ;
- il comprend au moins un élément de mise en tension du surtapis fixé à une région centrale du surtapis et à deux crochets disposés le long d'un même bord du surtapis pour maintenir en tension la zone du surtapis s'étendant entre la région centrale et ledit bord ;
- il comprend au moins un élément de mise en tension du surtapis fixé à une région centrale du surtapis et à deux crochets disposés le long de deux bords opposés du surtapis pour maintenir en tension la zone du surtapis s'étendant entre la région centrale et les bords latéraux ; et
- il comprend au moins un élément de mise en tension sous la forme d'une tige ou d'une lame flexible.

L'invention concerne également un ensemble d'habillage de planche de véhicule automobile, du type comprenant un tapis de plancher de véhicule automobile et un dispositif d'habillage tel que défini ci-dessus, dans lequel le tapis comprend des parties d'attache complémentaires des parties d'attache du surtapis.

Dans un mode de réalisation, le tapis comprend des parties d'attache sous la forme de cavités prévues pour recevoir des parties d'attache du surtapis sous la forme de crochets.

Dans un mode de réalisation, les parties d'attache du surtapis comprennent des crochets, chaque crochet comprenant une base de fixation du crochet sur la surface inférieure du surtapis et un doigt s'étendant à l'écart du surtapis, les doigts des crochets du surtapis et la région périphérique du surtapis étant prévus pour venir en prise sur les bords des cavités correspondantes du tapis.

L'invention concerne encore un véhicule automobile comprenant un ensemble d'habillage tel que défini ci-dessus.

L'invention et ses avantages seront mieux compris à la lecture de la description qui va suivre, donnée uniquement à titre d'exemple, et faite en référence aux dessins annexés, sur lesquels :
- la figure 1 est une vue schématique en perspective d'un ensemble d'habillage de plancher de véhicule automobile comprenant un dispositif d'habillage selon un premier mode de réalisation ;
- la figure 2 est une vue de dessous du dispositif d'habillage de la figure 1 ;
- les figures 3 et 4 sont des vues en coupe de l'ensemble d'habillage selon respectivement III-III et IV-IV sur la figure 1 ;
- la figure 5 est une vue analogue à celle de la figure 2 illustrant un dispositif d'habillage selon un second mode de réalisation.

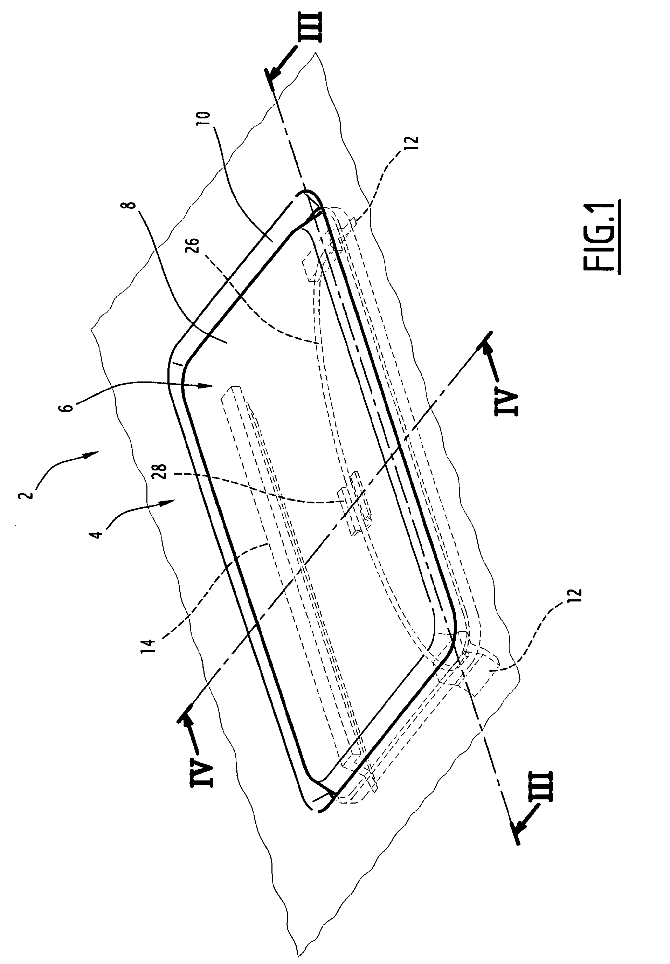

Tel qu'illustré sur la figure 1, l'ensemble d'habillage 2 de plancher de véhicule automobile comprend un tapis 4 de plancher de véhicule automobile et un dispositif d'habillage 6 comprenant un surtapis 8 prévu pour recouvrir localement le tapis 4 en étant fixé de manière amovible sur ce tapis 4.

Le surtapis 8 peut recouvrir n'importe quelle zone du tapis 4, notamment la zone située devant le conducteur, le passager avant ou les passagers arrière ou encore le coffre. Le surtapis 8 peut notamment recouvrir des zones pour les pieds des passagers aussi nommées « cave à pieds ».

Le surtapis 8 est prévu pour recouvrir, par exemple, la zone du tapis 4 située devant le conducteur, en arrière du pédalier. Cette zone est représentée sur la figure 1.

Cette zone est très sollicitée, car en cours d'utilisation, le conducteur pose généralement ses pieds à cet endroit.

Le démontage du surtapis 8 amovible permet de modifier l'ambiance intérieure (en fixant un autre surtapis), de remplacer un surtapis 8 usé ou encore de nettoyer facilement un surtapis 8 encrassé.

Le tapis 4 comprend, sur sa face supérieure visible, au moins une empreinte 10 de réception d'au moins un surtapis 8. L'empreinte 10 est en creux sur la face supérieure du tapis 4. Elle peut avoir n'importe quelle forme : sa périphérie peut être régulière ou non, découpée ou non, etc.. Dans un mode de réalisation particulier, elle présente une forme générale rectangulaire et ses coins sont arrondis.

Le surtapis 8 a une forme complémentaire de l'empreinte 10 et est prévu pour être reçu dans celle-ci en affleurant la région périphérique du tapis 4 entourant l'empreinte 10. Le surtapis 8 peut également être légèrement plus haut que la région périphérique du tapis 4 entourant l'empreinte 10 (en relief) ou à l'inverse légèrement plus bas (en creux).

Le surtapis 8 comprend généralement deux couches, une couche d'aspect et une couche d'envers. La couche d'aspect est, par exemple, une moquette (aiguilleté plat, dilour, tuft etc.) ou un TPO (thermoplastique polyoléfine). La couche d'envers est, par exemple, réalisée à base d'une matière thermoplastique ou d'une matière de la famille des styrènes butadiènes (par exemple, du latex), etc.

Dans un mode de réalisation particulier, le surtapis 8 comprend en aspect une moquette et en envers une couche de latex ou de matière thermoplastique. Le surtapis peut être surfilé sur sa périphérie.

En variante, le surtapis 8 est réalisé en matière thermoplastique (TPO).

Le tapis 4 est de préférence une moquette de première monte fixée ou posée sur le plancher. Il peut être posé ou fixé soit directement sur la tôle du plancher, soit sur un revêtement insonorisant disposé sur la tôle du plancher. Il peut être à base de matière textile ou plastique. Il a principalement une fonction de décor et peut également participer à l'insonorisation du plancher du véhicule.

Le tapis 4 comprend au moins 2 couches, une couche d'aspect et une couche d'envers. La couche d'aspect est, par exemple, une moquette (aiguilleté plat, dilour, tuft etc.) ou un TPO (thermoplastique polyoléfine). La couche d'envers est, par exemple, réalisée à base d'une matière thermoplastique chargée ou non, ou d'une matière de la famille des styrènes butadiènes (par exemple, du latex), ou d'un non tissé, ou d'un feutre, ou d'un film, etc.

Dans un mode de réalisation particulier, le tapis 4 comprend en aspect une moquette, du type aiguilleté plat, et en envers une couche de latex.

Dans un autre mode de réalisation particulier, le tapis 4 comprend en aspect une moquette, du type aiguilleté plat, et en envers une couche de matière thermoplastique chargée et extrudée, du type masse lourde.

Un système d'insonorisation peut-être ajouté du côté de la couche d'envers. Il comprend au moins une couche.

Le système d'insonorisation est, par exemple, monocouche et réalisé à base de feutre ou de mousse. Il peut-être lié ou non avec la couche d'envers.

Dans un mode de réalisation particulier, le tapis 4 comprend une moquette, du type aiguilleté plat ou dilour, une couche de matière thermoplastique chargée et extrudée, du type masse lourde, et une couche de mousse polyuréthane injectée directement sur la masse lourde.

En variante, un mat de feutre peut-être collé sur la masse lourde à la place de la mousse.

Le surtapis 8 est muni de parties d'attache destinées à coopérer avec des parties d'attache correspondantes du tapis 4 pour la fixation amovible du surtapis 8 sur le tapis 4.

Tel qu'illustré en pointillés sur la figure 1, les parties d'attaches du surtapis 8 comprennent des crochets 12, 14 disposés sous le surtapis 8. Avantageusement, ces crochets sont situés à la périphérie du surtapis 8.

Les crochets 12, 14 sont des pièces rigides rapportées et fixées sous le surtapis 8. Il sont réalisées par exemple en plastique injecté, renforcé ou non.

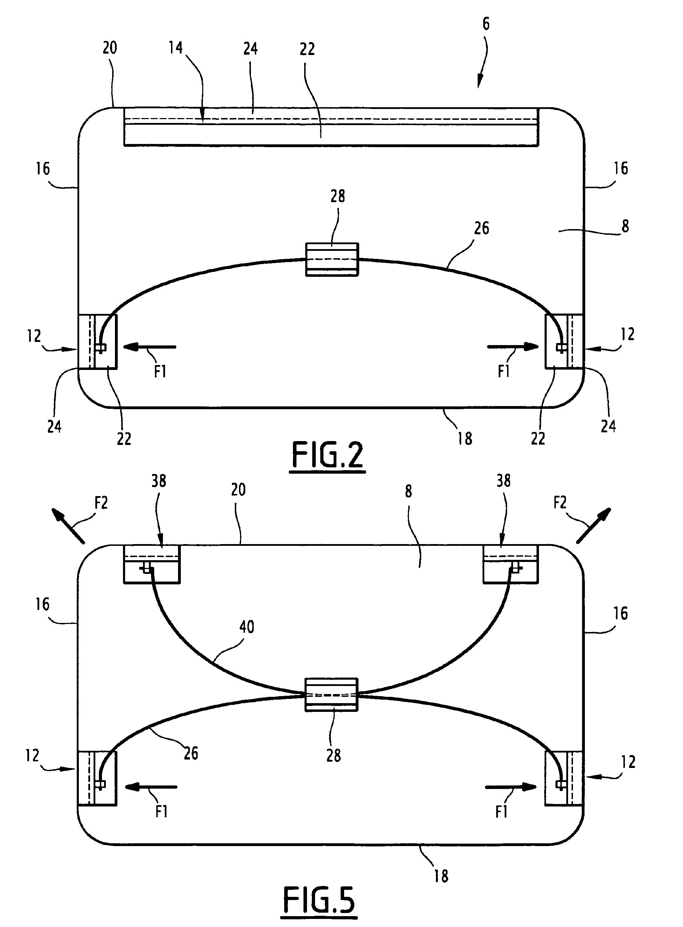

Tel qu'illustré sur la figure 2, le dispositif d'habillage 6 comprend deux crochets 12 latéraux disposés le long de deux bords latéraux 16 opposés du surtapis 8 et adjacents à un bord arrière 18 s'étendant entre les bords latéraux 16.

Le dispositif d'habillage 6 comprend en outre au moins un crochet 14 avant disposé le long d'un bord avant 20 du surtapis 8. Le crochet 14 avant peut s'étendre sur la majeure partie de la longueur du bord avant 20. Il peut également se situer sur la partie centrale du bord avant 20 du surtapis 8.

Chaque crochet 12, 14 comprend une base 22 de fixation du crochet sur la surface inférieure du surtapis 8 et un doigt 24 s'étendant à l'écart du surtapis 8 et prévu pour être inséré dans une cavité correspondante 30 du tapis, comme cela sera décrit par la suite.

Le dispositif d'habillage 6 comprend au moins un élément de mise en tension 26, 40 du surtapis 8, rapporté sous le surtapis 8 et permettant de maintenir en tension au moins une zone du surtapis 8.

L'élément de mise en tension 26, 40 est avantageusement un élément élastique, par exemple un ressort, fixé au surtapis 8. Cet élément peut être, par exemple, réalisé à base d'une lame ou d'un fil ou d'une tige métallique.

L'élément de mise en tension 26, 40 est déformé élastiquement afin que le surtapis 8 soit maintenu en tension sous l'effet de l'élément élastique tendant à récupérer sa forme initiale.

Tel qu'illustré sur la figure 2, l'élément de mise en tension se présente sous la forme d'une tige 26 flexible fixée sous le surtapis 8 et maintenue en tension entre les bords latéraux 16 du surtapis 8, en particulier entre les crochets 12 latéraux.

La tige 26 est fixée à chacune de ses extrémités sur un des crochets 12 latéraux en étant déformée élastiquement de façon à exercer par réaction un effort d'écartement des crochets 12 latéraux (flèches F1).

La fixation de la tige 26 sur les crochets 12 peut être, par exemple, réalisée par soudage, rivetage, «clippage» ou surmoulage etc.

La tige 26 est courbée, et sa partie centrale est fixée au surtapis 8. La fixation peut être, par exemple, assurée par un gousset, un cavalier (plastique ou métallique), un clip ou encore de la colle. Dans un mode de réalisation particulier, la tige 26 passe dans au moins un gousset 28, lequel est fixé sur la surface inférieure du surtapis 8.

En variante, la tige 26 peut être sensiblement rectiligne et sa partie centrale peut ne pas être fixée au surtapis 8.

Il en résulte que le surtapis 8 est maintenu en tension entre ses deux bords latéraux 16, et plus spécifiquement dans la zone arrière située entre le bord arrière 18, le centre du surtapis et les bords latéraux 16.

Le tapis 4 comprend des parties d'attache destinées à coopérer avec les parties d'attache du surtapis 8 pour la fixation amovible du surtapis 8 sur le tapis 4.

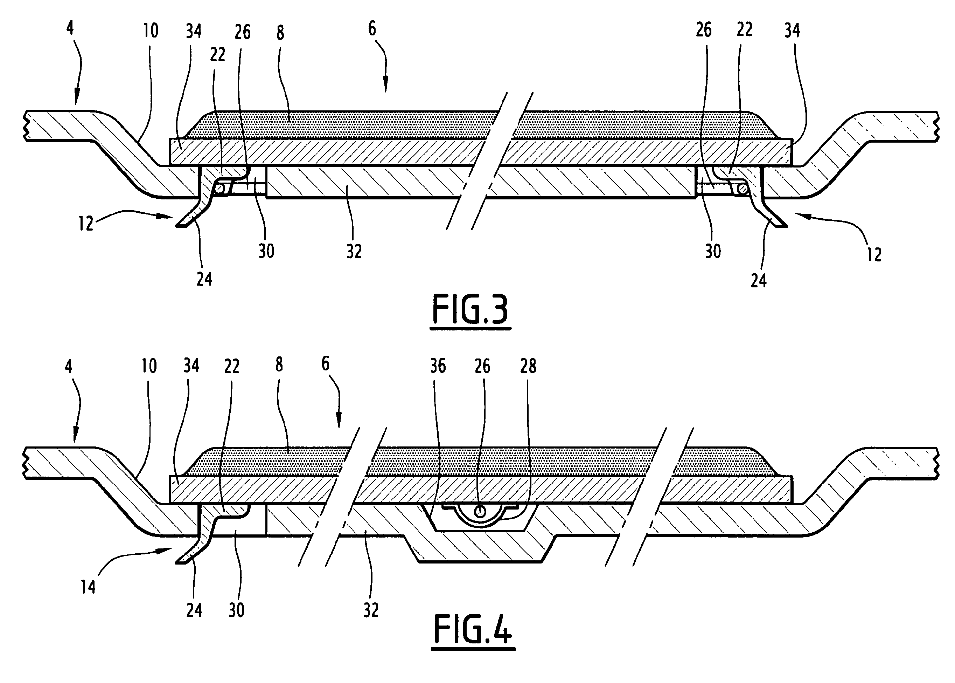

Tel qu'illustré sur les figures 3 et 4, le tapis 4 comprend des parties d'attache qui ont la forme de cavités 30 ménagées dans le fond 32 de l'empreinte 10.

Dans l'exemple illustré, la base 22 de chaque crochets 12, 14 est fixée en retrait du bord du surtapis 8 et le doigt 24 du crochet 12, 14 s'étend vers le bord, de sorte que le crochet 12, 14 définit avec la région périphérique 34 du surtapis 8 une fourche dans laquelle peut s'engager un bord de la cavité 30 correspondante du tapis 4.

Le doigt 24 de chaque crochet 12, 14 et la région périphérique 34 viennent en prise sur le bord de la cavité 30 correspondante du tapis 4 pour la fixation du surtapis 8 sur le tapis 4.

Le bord de la cavité 30 du tapis 4 est pris en sandwich entre le doigt 24 du crochet 12, 14 et la région périphérique 34.

La région périphérique 34 du surtapis permet également d'éviter que des saletés ou des liquides ne rentrent dans les cavités 30 du tapis 4.

En variante, la base 22 de chaque crochet 12, 14 est fixée sur le bord du surtapis 8, de sorte que le doigt 24 de chaque crochet 12, 14 fait saillie vers l'extérieur du surtapis 8. Seul le doigt 24 de chaque crochet 12, 14 vient en prise dans la cavité 30 correspondante du tapis 4 pour la fixation du surtapis 8 sur le tapis 4.

Tel qu'illustré sur la figure 4, le fond 32 de l'empreinte 10 du tapis 4 peut comprendre au moins une gorge 36 de réception d'au moins une tige 26 pour permettre au surtapis 8 de reposer à plat sur le fond 32.

Pour la fixation du surtapis 8 sur le tapis 4, le surtapis 8 est incliné vers l'avant pour engager le crochet 14 avant dans la cavité 30 correspondante du tapis 4, puis le surtapis 8 est légèrement déformé en rapprochant les bords latéraux 16 puis abaissé de façon à insérer les crochets 12 latéraux dans les cavités 30 correspondantes du tapis 4. Enfin, le surtapis 8 est relâché et reprend sa forme initiale. Il est maintenu en tension sous l'effet de la tige 26, de sorte que les crochets 12 latéraux sont fermement maintenus en prise dans les cavités 30 correspondantes du tapis 4.

Dans un mode de réalisation particulier, le surtapis 8 peut être retiré du fond 32 de l'empreinte 10 du tapis 4 au moyen d'un système de préhension (non représenté). Ce système est, par exemple, réalisé au moyen d'un cordon ou d'une languette, en plastique ou en textile.

Lorsque l'utilisateur tire le système de préhension vers le haut, la tige 26 se déforme et les parties d'attache du surtapis 8 se désengagent des parties d'attache du tapis 4.

L'effort nécessaire pour retirer le surtapis 8 du tapis 4 est compris entre 2 et 12 daN, avantageusement entre 6 et 10 daN.

Dans un mode de réalisation particulier, le crochet 14 avant du surtapis 8 est de forme allongée ce qui rigidifie la partie avant du surtapis 8 et limite ses déformations. Il en résulte que le crochet 14 avant du surtapis 8 est maintenu dans la cavité 30 correspondante du tapis 4 de manière fiable. En outre, la mise en tension exercée par la tige 26 maintient le surtapis 8 en position par rapport au tapis 4 et contribue donc à maintenir le crochet 14 avant en prise dans sa cavité 30 correspondante.

La tige 26 est un moyen simple, léger et peu coûteux, pour sécuriser la fixation du surtapis 8 sur le tapis 4. Les parties d'attache du surtapis 8 et du tapis 4 ne peuvent être désolidarisées qu'en exerçant un effort suffisant pour déformer la tige 26.

En variante, il est possible de prévoir des parties d'attache différentes, par exemple sous la forme de pattes saillantes prévues à la périphérie du surtapis 8 et s'engageant dans des cavités correspondantes ménagées dans la paroi latérale de l'empreinte 10 du tapis 4. Dans ce cas, non représenté, les extrémités de la tige 26 sont fixées le long des bords du surtapis 8 et la tige 26 empêche l'extraction des pattes des cavités latérales.

Dans un mode de réalisation particulier, la tige 26 est sensiblement rectiligne et est fixée à chacune de ses extrémités sur un des crochets 12 latéraux, lesquels sont disposés en vis-à-vis sur les bords 16 latéraux du surtapis 8.

Dans le deuxième mode de réalisation illustré sur la figure 5, le dispositif d'habillage 6 diffère de celui de la figure 2 en ce qu'un second élément de mise en tension 40 du surtapis 8 est rapporté sous le surtapis 8 et permet de maintenir en tension une autre zone du surtapis.

De plus, l'unique crochet 14 avant est remplacé par deux crochets 38 avant disposés le long du même bord avant 20 et espacés l'un de l'autre.

Le dispositif d'habillage 6 comprend un élément de mise en tension 40, par exemple une tige flexible, qui maintient en tension la zone avant du surtapis 8, plus précisément la zone située environ entre la région centrale du surtapis 8 et le bord avant 20.

La tige 40 est fixée à chacune de ses extrémités sur un des crochets 38 avant. Elle est courbée et sa partie centrale est fixée sur la surface inférieure du surtapis 8. La fixation est, par exemple, assurée par un ou plusieurs goussets 28, cavaliers ou clips ou encore de la colle.

La tige 40 est déformée élastiquement de façon à exercer par réaction un effort d'écartement des crochets avant 38 (flèches F2).

Le surtapis 8 est fixé sur le tapis 4 et retiré du fond 32 de l'empreinte 10 du tapis 4 de manière analogue à ce qui a été décrit précédemment. En fonctionnement, la tige 40 assure le maintien en prise des crochets 38 avant du surtapis 8 dans les cavités 30 correspondantes du tapis 4.

En variante, l'unique crochet 14 avant peut être remplacé par deux crochets 38 avant disposés le long de deux bords latéraux 16 opposés du surtapis 8 et adjacents à un bord avant 20 s'étendant entre les bords latéraux 16.

L'invention s'applique notamment à l'habillage des caves à pied conducteur et passager et plus généralement à toutes les zones d'un tapis d'un plancher de véhicule automobile.

## Revendications

1. Dispositif d'habillage de plancher de véhicule automobile, du type comprenant un surtapis (8) prévu pour recouvrir un tapis (4) de plancher de véhicule automobile, le surtapis (8) étant muni de parties d'attache (12, 14, 38) prévues pour coopérer avec des parties d'attache (30) correspondantes du tapis (4) pour la fixation amovible du surtapis (8) sur le tapis (4), **caractérisé en ce qu'**il comprend au moins un élément de mise en tension (26, 40) élastique rapporté sous le surtapis (8) de façon à maintenir au moins une zone du surtapis (8) en tension, le ou chaque élément de mise en tension étant rapporté sous le surtapis en étant déformé élastiquement de sorte que le surtapis est maintenu en tension sous l'effet de l'élément de mise en tension tendant à récupérer sa forme initiale.

2. Dispositif selon la revendication 1, comprenant au moins un élément de mise en tension (26) disposé de façon à maintenir en tension une zone du surtapis (8) s'étendant entre deux bords opposés (16) du surtapis (8).

3. Dispositif d'habillage selon la revendication 1 ou 2, comprenant au moins un élément de mise en tension (40) disposé de façon à maintenir en tension une zone du surtapis (8) s'étendant entre une région centrale du surtapis (8) et un bord (16, 18, 20) du surtapis (8).

4. Dispositif d'habillage selon l'une quelconque des revendications précédentes, comprenant deux parties d'attache (12) disposées le long de deux bords (16) opposés du surtapis (8) entre lesquels le surtapis (8) est maintenu en tension par un élément de mise en tension (26).

5. Dispositif d'habillage selon l'une quelconque des revendications précédentes, comprenant deux parties d'attache (38) disposées le long d'un même bord (20) du surtapis (8) entre lesquels le surtapis (8) est maintenu en tension par un élément de mise en tension (40).

6. Dispositif d'habillage selon l'une quelconque des revendications précédentes, dans lequel les parties d'attache du surtapis (8) comprennent des crochets (12, 14, 38).

7. Dispositif d'habillage selon la revendication 6, comprenant un élément de mise en tension ayant deux extrémités, chaque extrémité de l'élément de mise en tension (26, 40) est fixée sur un crochet (12, 38).

8. Dispositif d'habillage selon les revendications 6 ou 7, comprenant au moins un élément (40) de mise en tension du surtapis (8) fixé à une région centrale (28) du surtapis (8) et à deux crochets (38) disposés le long d'un même bord (20) du surtapis (8) pour maintenir en tension la zone du surtapis (8) s'étendant entre la région centrale (28) et ledit bord (20).

9. Dispositif d'habillage selon l'une des revendications 6 à 8, comprenant au moins un élément (26) de mise en tension du surtapis (8) fixé à une région centrale (28) du surtapis (8) et à deux crochets (12) disposés le long de deux bords (16) opposés du surtapis (8) pour maintenir en tension la zone du surtapis (8) s'étendant entre la région centrale (28) et les bords latéraux (16).

10. Dispositif d'habillage selon l'une quelconque des revendications précédentes, comprenant au moins un élément de mise en tension (26, 40) sous la forme d'une tige ou d'une lame (26, 40) flexible.

11. Ensemble d'habillage de plancher de véhicule automobile, du type comprenant un tapis (4) de plancher de véhicule automobile et un dispositif d'habillage selon l'une quelconque des revendications précédentes, dans lequel le tapis (4) comprend des parties d'attache (30) complémentaires des parties d'attache (12, 14, 38) du surtapis (8).

12. Ensemble d'habillage selon la revendication 11, dans lequel le tapis (4) comprend des parties d'attache sous la forme de cavités (30) prévues pour recevoir des parties d'attache du surtapis (8) sous la forme de crochets (12, 14, 38).

13. Ensemble d'habillage selon la revendication 11 ou 12, dans lequel les parties d'attache du surtapis (8) comprennent des crochets (12, 14, 38), chaque crochet (12, 14, 38) comprenant une base (22) de fixation du crochet (12, 14, 38) sur la surface inférieure du surtapis (8) et un doigt (24) s'étendant à l'écart du surtapis (8), les doigts (24) des crochets (12, 14, 38) du surtapis (8) et la région périphérique (34) du surtapis (8) étant prévus pour venir en prise sur les bords des cavités (30) correspondantes du tapis (4).

14. Véhicule automobile comprenant un ensemble d'habillage selon l'une quelconque des revendications 11 à 13.

## Claims

1. Device for covering the floor of a motor vehicle, of the kind comprising an over-carpet mat (8) provided for lying on top of a motor vehicle floor carpet (4), the over-carpet mat (8) being provided with attachment parts (12, 14, 38) provided for co-operating with corresponding attachment parts (30) of the carpet (4) for removably fixing the over-carpet mat (8) onto the carpet (4), **characterised in that** it comprises at least one resilient tensioning element (26, 40) mounted underneath the over-carpet mat (8) so as to maintain at least one zone of the over-carpet mat (8) under tension, the or each tensioning element being mounted underneath the over-carpet mat whilst being subject to elastic deformation such that the over-carpet mat is maintained under tension under the effect of the tensioning element tending to return to its initial shape.

2. Device according to claim 1, comprising at least one tensioning element (26) arranged so as to maintain under tension a zone of the over-carpet mat (8) which extends between two opposite edges (16) of the over-carpet mat (8).

3. Covering device according to claim 1 or 2, comprising at least one tensioning element (40) arranged so as to maintain under tension a zone of the over-carpet mat (8) which extends between a central region of the over-carpet mat (8) and an edge (16, 18, 20) of the over-carpet mat (8).

4. Covering device according to any one of the preceding claims, comprising two attachment parts (12) arranged along two opposite edges (16) of the over-carpet mat (8) between which the over-carpet mat (8) is maintained under tension by a tensioning element (26).

5. Covering device according to any one of the preceding claims, comprising two attachment parts (38) arranged along one and the same edge (20) of the over-carpet mat (8) between which the over-carpet mat (8) is maintained under tension by a tensioning element (40).

6. Covering device according to any one of the preceding claims, wherein the attachment parts of the over-carpet mat (8) comprise hooks (12, 14, 38).

7. Covering device according to claim 6, comprising a tensioning element having two extremities, each extremity of the tensioning element (26, 40) being fixed on a hook (12, 38).

8. Covering device according to claim 6 or 7, comprising at least one element (40) for tensioning the over-carpet mat (8) fixed to a central region (28) of the over-carpet mat (8) and to two hooks (38) arranged along one and the same edge (20) of the over-carpet mat (8) for maintaining under tension the zone of the over-carpet mat (8) which extends between the central region (28) and said edge (20).

9. Covering device according to one of claims 6 to 8, comprising at least one element (26) for tensioning the over-carpet mat (8) fixed to a central region (28) of the over-carpet mat (8) and to two hooks (12) arranged along two opposite edges (16) of the over-carpet mat (8) for maintaining under tension the zone of the over-carpet mat (8) which extends between the central region (28) and the side edges (16).

10. Covering device according to any one of the preceding claims, comprising at least one tensioning element (26, 40) in the form of a flexible rod or strip (26, 40).

11. Set for covering the floor of a motor vehicle, of the kind comprising a motor vehicle floor carpet (4) and a covering device according to any one of the preceding claims, wherein the carpet (4) comprises attachment parts (30) which are complementary to the attachment parts (12, 14, 38) of the over-carpet mat (8).

12. Covering set according to claim 11, wherein the carpet (4) comprises attachment parts in the form of recesses (30) provided for receiving attachment parts of the over-carpet mat (8) in the form of hooks (12, 14, 38).

13. Covering set according to claim 11 or 12, wherein the attachment parts of the over-carpet mat (8) comprise hooks (12, 14, 38), each hook (12, 14, 38) comprising a base (22) for fixing the hook (12, 14, 38) to the bottom surface of the over-carpet mat (8) and a finger (24) extending away from the over-carpet mat (8), the fingers (24) of the hooks (12, 14, 38) of the over-carpet mat (8) and the peripheral region (34) of the over-carpet mat (8) being arranged to come into engagement at the edges of the corresponding recesses (30) in the carpet (4).

14. Motor vehicle comprising a covering set according to any one of claims 11 to 13.

## Patentansprüche

1. Vorrichtung zur Verkleidung des Bodens eines Kraftfahrzeugs, vom Typ umfassend einen Teppich (8), der dafür vorgesehen ist, eine Bodenmatte (4) eines Kraftfahrzeugs abzudecken, wobei der Teppich (8) mit Befestigungsteilen (12, 14, 38) versehen ist, die für das Zusammenwirken mit korrespondierenden Teilen für die Befestigung der Bodenmatte (4) vorgesehen sind für die lösbare Befestigung des Teppichs (8) auf der Bodenmatte (4), **dadurch gekennzeichnet, dass** sie zumindest ein elastisches Spannelement (26, 40) umfasst, das unter dem Teppich (8) angebracht ist, derart, dass es zumindest eine Zone des Teppichs (8) unter Spannung hält, wobei das oder jedes Spannelement unter dem Teppich angebracht ist, indem es elastisch verformt ist, so dass der Teppich unter der Einwirkung des Spannelements, das dazu neigt, seine ursprüngliche Form wiedereinzunehmen, unter Spannung gehalten wird.

2. Vorrichtung nach Anspruch 1, umfassend zumindest ein Spannelement (26), das derart angeordnet ist, dass es eine Zone des Teppichs (8) unter Spannung hält, die sich zwischen zwei entgegengesetzten Rändern (16) des Teppichs (8) erstreckt.

3. Verkleidungsvorrichtung nach Anspruch 1 oder 2, umfassend zumindest ein Spannelement (40), das derart angeordnet ist, dass es eine Zone des Teppichs (8) unter Spannung hält, die sich zwischen einem mittigen Bereich des Teppichs (8) und einem Rand (16, 18, 20) des Teppichs (8) erstreckt.

4. Verkleidungsvorrichtung nach einem der vorhergehenden Ansprüche, umfassend zwei Befestigungsteile (12), die entlang von zwei entgegengesetzten Rändern (16) des Teppichs (8), zwischen denen der Teppich (8) durch ein Spannelement (26) unter Spannung gehalten wird, angeordnet sind.

5. Verkleidungsvorrichtung nach einem der vorhergehenden Ansprüche, umfassend zwei Befestigungsteile (38), die entlang von ein und demselben Rand (20) des Teppichs (8), zwischen denen der Teppich (8) durch ein Spannelement (40) unter Spannung gehalten wird, angeordnet sind.

6. Verkleidungsvorrichtung nach einem der vorhergehenden Ansprüche, wobei die Teile für die Befestigung des Teppichs (8) Haken (12, 14, 38) umfassen.

7. Verkleidungsvorrichtung nach Anspruch 6, umfassend ein Spannelement mit zwei Enden, wobei jedes Ende des Spannelements (26, 40) an einem Haken (12, 38) befestigt ist.

8. Verkleidungsvorrichtung nach den Ansprüchen 6 oder 7, umfassend zumindest ein Element zum Spannen (40) des Teppichs (8), das an einem mittigen Bereich (28) des Teppichs (8) und an zwei Haken (38), die entlang ein und desselben Rands (20) des Teppichs (8) angeordnet sind, befestigt ist, um die Zone des Teppichs (8), die sich zwischen dem mittigen Bereich (28) und dem Rand (20) erstreckt, unter Spannung zu halten.

9. Verkleidungsvorrichtung nach einem der Ansprüche 6 bis 8, umfassend zumindest ein Element zum Spannen (40) des Teppichs (8), das an einem mittigen Bereich (28) des Teppichs (8) und an zwei Haken (12), die entlang von zwei entgegengesetzten Rändern (16) des Teppichs (8) angeordnet sind, befestigt ist, um die Zone des Teppichs (8), die sich zwischen dem mittigen Bereich (28) und den seitlichen Rändern (16) erstreckt, unter Spannung zu halten.

10. Verkleidungsvorrichtung nach einem der vorhergehenden Ansprüche, umfassend zumindest ein Spannelement (26, 40) in Form eines flexiblen Stabs oder einer flexiblen Zunge (26, 40).

11. Anordnung zur Verkleidung des Bodens eines Kraftfahrzeugs, vom Typ umfassend eine Bodenmatte (4) eines Kraftfahrzeugs und eine Verkleidungsvorrichtung nach einem der vorhergehenden Ansprüche, wobei die Matte (4) Befestigungsteile (30) umfasst, die zu den Teilen für die Befestigung (12, 14, 38) des Teppichs (8) komplementär sind.

12. Verkleidungsanordnung nach Anspruch 11, wobei die Matte (4) Befestigungsteile in Form von Vertiefungen (30) umfasst, die vorgesehen sind für die Aufnahme der Teile für die Befestigung des Teppichs (8) in Form von Haken (12, 14, 38).

13. Verkleidungsanordnung nach Anspruch 11 oder 12, wobei die Teile für die Befestigung des Teppichs (8) Haken (12, 14, 38) umfassen, wobei jeder Haken (12, 14, 38) eine Basis (22) zum Befestigen des Hakens (12, 14, 38) an der unteren Oberfläche des Teppichs (8) und einen Finger (24), der sich von dem Teppich (8) weg erstreckt, umfasst,' wobei die Finger (24) der Haken (12, 14, 38) des Teppichs (8) und der umlaufende Bereich (34) des Teppichs (8) dafür vorgesehen sind, mit den Rändern der korrespondierenden Vertiefungen (30) des Teppichs (4) in Eingriff zu kommen.

14. Kraftfahrzeug, umfassend eine Verkleidungsanordnung nach einem der Ansprüche 11 bis 13.
